# EUROPEAN PATENT SPECIFICATION

(11) **EP 1 561 434 B1**
(45) Date of publication and mention of the grant of the patent: **11.11.2009**
(21) Application number: 04772800.1
(22) Date of filing: 03.09.2004
(51) Int. Cl.: A61C 13/235

(54) **DENTURE ATTACHMENT, DENTURE AND PROCESS FOR PRODUCING THE SAME**
GEBISSBEFESTIGUNG, GEBISS UND HERSTELLUNGSVERFAHREN DAFÜR
ACCESSOIRE DE PROTHESE, PROTHESE ET SON PROCEDE DE PRODUCTION

(30) Priority: 05.09.2003 JP 2003314499
(43) Date of publication of application: 10.08.2005
(73) Proprietor: Aichi Steel Corporation, Tokai-shi, Aichi-Ken 476-8666 (JP)
(72) Inventor: HONKURA, Yoshinobu; c/o Aichi Steel Corporation, Tokai-shi, Aichi 4768666 (JP); ARAI, Kazuo; c/o Aichi Steel Corporation, Tokai-shi, Aichi 4768666 (JP)
(74) Representative: Kramer - Barske - Schmidtchen
(86) International application number: PCT/JP2004/012851
(87) International publication number: WO 2005/023140

(56) References cited:
- EP-A1- 0 993 809
- FR-A- 1 493 464
- FR-A- 2 718 948
- FR-A1- 2 587 895
- JP-A- 9 154 856
- JP-A- 10 323 356
- JP-A- 2000 308 648
- JP-A- 2002 282 281

## Description

This invention relates to a dental attachment which is used to embed a denture by magnetic force, and a denture which is comprised using such a dental attachment, and a method of manufacturing thereof.

### BACKGROUND OF ART

In dental treatment, as is shown in patent reference 1, because of the easiness of putting on or taking off the denture, various dental attachments utilizing magnetic attractive force have been proposed.

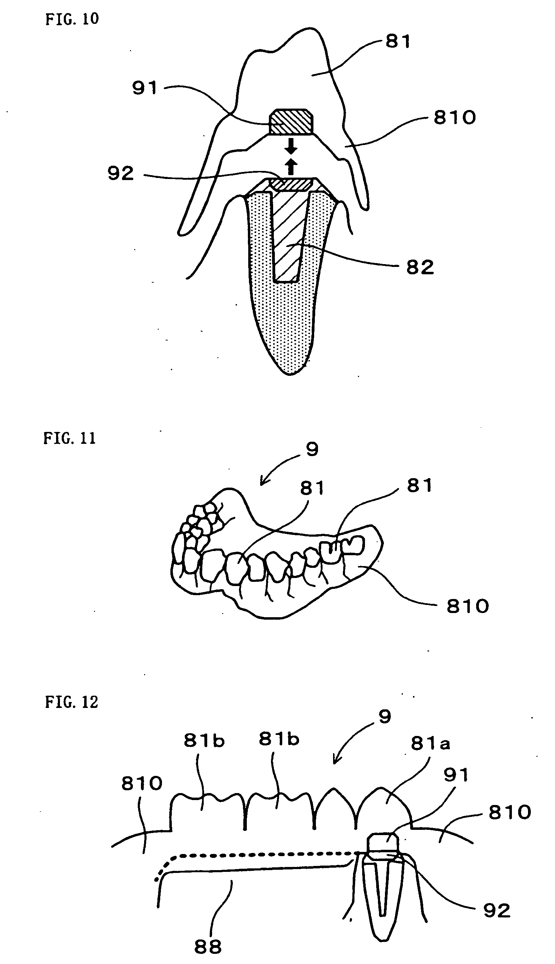

A dental attachment 91, which has a magnetic body, is, as is shown in FIG10, embedded in the denture base 810, which is fixed with artificial tooth 81. On the side of the tooth root, a keeper 92 made of soft magnetic material is embedded in the root cap 82 or an implant (the embodiment is abbreviated) is embedded. Therefore the denture, which has dental attachment 91, can be fixed to the keeper 92 by magnetic attractive force.

As is shown FIG 11 and FIG 12, in denture 9 in which are planted a plurality of artificial teeth 81 in the denture base 810, an artificial tooth 81a corresponding to the place where said dental attachment is embedded and the artificial tooth 81a corresponding to the place where said dental attachment 91, that is a keeper 92, is not embedded, exist.

Until now, after a denture is made, the denture is put in a oral space for about two weeks without a dental attachment (magnetic assembly) built in the denture and when the submergence of the gingiva is stabilized, a dentist has combined a dental attachment to said denture. So the stress to the abutment where the dental attachment works is alleviated. But in about half a year, the gingiva gradually submerges and modification of the denture and recombination of the dental attachment are needed.

On the other hand, dentists desire that the dental attachment should be combined with a denture in the making process before dentists work to put the dental attachment into a denture. However, if in the making process the combination is done, where and how much gingiva submerges cannot be predicted. Therefore, if a denture, which is combined with a dental attachment in a conventional making process, is put on for about a week, the stress to an abutment is concentrated and a strange feeling or ache is generated.

In more detail, if a denture which is made and completed on the model is used, because the denture is not adequately adapted to the oral space, due to occluding stress, artificial tooth 81b and denture base 810 supporting it begin to submerge according to the change of the gingiva 88. Meanwhile, embedded dental attachment 91 cannot submerge because a keeper 92 and dental attachment 91 exist. Therefore the occluding stress is concentrated on the artificial tooth 81a, which is embedded according to the location of embedded dental attachment 91, and it causes a strange feeling or ache to the patient with a denture 9.

Therefore, especially in the case of combining a dental attachment to a denture in the making process, development of a dental attachment which has a function to abbreviate the stress to the abutment has been desired.

Also, the development of the manufacturing method of a denture with a dental attachment has been desired.

Patent reference 1 ; Japanese published unexamined patent application 7-136190
patent reference 2; Japanese unexamined utility model application 6- 86715

EP 0 993 809 A1 relates to a dental magnetic attachment embedded in the denture base for holding the denture in the oral cavity by a magnetic attractive force working with a magnetic assembly and a soft magnetic keeper embedded in the top of the root surface. The magnetic assembly is covered with a cap which is formed as a body which consist of a core and a sleeve formed around the core. The cap can slide in the vertical direction along the side of the magnetic assembly. The core covering the magnetic assembly is placed at a designated distance over the top of the magnetic assembly on non loading and is moved to the top of it on loading, and a sleeve being tightened to the side of the magnetic assembly can slide along the side of the magnetic assembly.

The problem underlying the present invention is to provide a dental attachment which can restrain the concentration of occluding stress to the part where the dental attachment is combined even after long use, a denture using that dental attachment, and its manufacturing method.

The above-mentioned problem is solved by the dental attachment according to claim 1, the denture according to claim 4 and the method according to claim 5. Further developments of the present invention are set out in the dependent claims.

The dental attachment of the present invention has, as said, a cap which is movable between said connecting position and the extended position. Therefore the whole denture containing a cap can move to the said attachment body embedded with fixed said cap. So, even if the place where a keeper and attachment body is connected is fixed, the whole denture with said cap can be moved relative to said keeper within said set distance. Therefore even if the denture is made on a model, the denture with said dental attachment can be moved according to the change of the shape of the gingiva.
Therefore, the denture with said dental attachment can restrain the concentration of the occluding stress even if it is completed on the model in the making process.

Especially, it is not necessary to put the denture in the oral space for about two weeks to stabilize the submergence of gingiva after the conventional denture without dental attachment is made. So, it is possible to complete the denture with dental attachment on the model in the making process. Also, the necessity to modify the denture and recombine the dental attachment is reduced.
Yet also it is needless to say that even in the case that without combining the dental attachment to the denture in the making process, the dentist combines the dental attachment to the denture after stabilizing the submergence of the gingiva in the conventional way, and the necessity to modify the denture and recombine the dental attachment can be reduced.

The attachment body (sometimes called a magnet assembly) may have any well-known structure. Also, the keeper, which is combined to a dental attachment, may have any well-known structure.
Furthermore, the absorbing face on said dental attachment, as is shown in the following embodiment, may be flat, may have a convex face, or may have a concave face with a set curvature.

Furthermore, the present invention provides a denture which consists of a artificial tooth planted in the dental base and the above-described dental attachment embedded in said dental base to contact the keeper made of soft magnetic material built in the root part by magnetic attractive force.

The denture according to the present invention has the so constituted dental attachment. As is mentioned above, a dental base holds the cap and said attachment body is embedded so as to be able to be movable to the cap. Therefore, if at the beginning of use, said attachment body is moved forward and set so as to make a gap between head portion and the cap, the cap moves forward relative to the attachment body after use and the placement position of the denture can be changed. Thus, as is mentioned above, this invented denture can restrain the concentration of occluding stress at the combining part at the opposite side of the absorbing face to join said keeper of dental attachment.

A third aspect of the invention is a method of manufacturing the denture in which the artificial tooth is planted in the dental base and the above-described dental attachment is embedded in said dental base so as to be joined to the keeper made of non-magnetic material in the tooth root part, which method is set out in claim 5.
The method of making the denture includes the following steps:
A step of making the denture body in which said artificial tooth is planted in said dental base and said dental base has a recess to insert said dental attachment in said denture base,
a step of making a model at the keeper side in which said keeper is embedded in the mimic gingiva which imitates the shape of the gingiva containing said tooth root,
a step of setting a dental attachment in which a spacer, which has a thickness within the movable range of said cap of said dental attachment, is put on said keeper of model at said keeper side and in which the dental attachment is put so as to connect said disk to said spacer and also said cap of said dental attachment is embedded at the said connecting location, and
a step of uniting the dental attachment in which said dental body is covered on said model at the keeper side so as to house said dental attachment in said recess applied with adhesive inside.

In this dental attachment manufacturing process according to the present invention, at least the step of making of said denture body, the step of making a model at said keeper side, the step of setting said dental attachment and the step of uniting said dental attachment are performed. The most remarkable part of the manufacturing method is that before uniting the said dental attachment, said spacer is intervened on the model keeper on said keeper side, and has a step of setting said dental attachment which is embedded with said cap embedded at said connecting location.

By practicing the step of contacting the dental attachment after setting the dental attachment using this spacer, the dental attachment embedded in dental base has a structure with a gap of the thickness of said spacer between the keeper and attachment body. Therefore, when the denture is put on the gingiva of the same shape as the model at said keeper and started to be used, facing the keeper, the attachment body moves forward relative to the keeper and is magnetically connected with the keeper. Thus, a gap of the thickness of said spacer exists between the face of the head portion of the attachment body and the cap. After that, as mentioned, the cap moves forward relative to the attachment body using said gap, according to the change of the shape of the gingiva. So, the placement location of the denture changes and the concentration of occluding stress can be restrained.

FIG 1 is an illustration of the first embodiment of the structure of the dental attachment;
FIG 2 is an illustration of the second embodiment of the structure of the denture;
FIG 3 is an illustration of the second embodiment of the structure of the denture body;
FIG 4 is an illustration of the second embodiment of the structure of the model on the keeper side;
FIG 5 is an illustration of the second embodiment in a state in which the spacer and dental attachment are set on the model at the keeper side;
FIG 6 is an illustration of the second embodiment in a state of the contacting process of the dental attachment;
FIG 7 is an illustration of the second embodiment in a state of beginning to use the dental attachment actually;
FIG 8 is an illustration of the third embodiment of the structure of the dental attachment;
FIG 9 is an illustration of the fourth embodiment in the state of setting a spacer and dental attachment on the model on the keeper side;
FIG 10 is an illustration of the state of using a dental attachment in the prior art;
FIG 11 is an illustration of a denture in the prior art;
FIG 12 is an illustration of a bad state in the prior art.

Said attachment body of the dental attachment of the said first aspect of the invention consists of said magnetic body, yoke made of soft magnetic material which has a recess housing said magnetic body, a disk made of non-magnetic material which is set so as to close the opening of said recess with said magnetic body housed in said recess, and a ring shaped connecting location made of non-magnetic material to connect said disk and said yoke. Said cap covers said head portion which is located on the opposite side of the said yoke with said opening part.
Thus, said yoke, disk and the ring shaped connecting part between these can form an ideal magnetic circuit and the magnetic force of said magnetic body can be utilized efficiently.

The non-magnetic material constituting said yoke can be various soft magnetic materials, for instance, 17Cr stainless steel, 17Cr-2Mo stainless steel, and 19Cr-2Mo stainless steel are preferable. These are superior in non-corrosion and can improve the endurance.
Also, as soft magnetic material for said disk, various soft magnetic materials are available and the same materials as the said yoke can be used. Still, the connection of said disk and said yoke is practiced on the ring shaped connecting part made of said non-magnetic material. As a specific connecting method, welding is applicable.
Also, as said magnetic body built in said yoke, a magnet with high magneto motive force per unit volume is used. Specifically, for instance, Sm-Co based, Nd-Fe-B based, or rare earth magnets with high-energy product are preferable.

Also, said attachment body has collars protruding radially outward from the outer peripheral surface thereof. Said cap has a bottom part to face said portion part and a lateral part which faces said outer peripheral surface and covers said collars. Also, said lateral part has a part protruding inward to said outer peripheral surface of said attachment body and said cap is constituted so as to engage said part protruding inward with said collars.
By this structure, relative movement between said cap and said attachment body is possible and the moving distance between said collars and said inward protruding part can be easily controlled by engaging them.

It is preferable that the outer peripheral surface of said cap has a taper that has a smaller diameter as it becomes further away from said bottom and/or a part protruding outward . In this case, when said denture is held in the denture base, said taper face or outer protruding part bites and exerts the undercut effect, so the fitting strength of both can be improved.

Also, it is preferable that said cap is made of synthetic resin. In this case, by using flexibility of the synthetic resin constituting the cap, the operation to fit with the attachment body can be done easily and the manufacturing becomes simpler.
As said synthetic resin, for instance, POM, PE, PET etc. can be used.

Next, in the third aspect of the invention, said spacer is preferably made of permanent magnetic or soft magnetic material . In this case, when a spacer is equipped on said keeper, the location between both can be maintained stably, and also when the dental attachment is equipped on the spacer, the location between both can be maintained stably. Therefore, afterward the uniting process of the dental attachment can be stably done.

### (embodiment 1)

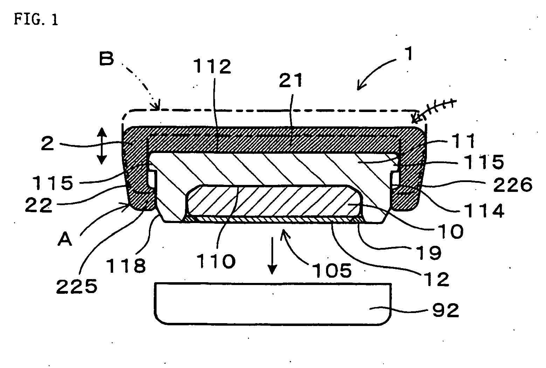

A first embodiment of the dental attachment of the present invention is explained using FIG 1.

The dental attachment 1 of this example is, as is shown in FIG 1, a dental attachment which is embedded in the dental base so as to be conjugated to the keeper 92 made of soft magnetic material in the tooth root by magnetic attractive force.

The dental attachment 1 consists attachment body 100 which has magnetic body 10 exerting magnetic attractive force and cap2 covering head portion 112 which is located at the side opposite to the absorbing face 105 to fit keeper 92 of said attachment body 100. Cap 2, made of non-magnetic material, is fit to said attachment body 100 so as to be able to move between connecting location (A) with said head portion 112 and the extended location(B) which is a certain amount away.

Said attachment 100 consists, as is shown in the same FIG, of magnetic body 10 exerting magnetic attractive force, yoke 11 made of soft magnetic material which has recess 110 housing said magnetic body, disk 12 which covers the opening part of said recess110 with said magnetic body 10 housed in said recess, and ring shaped connecting part 19, made of non-magnetic material, which connects said disk12 with said yoke 11. Cap 2 covers said head portion 112 which is opposite side to said opening part of said yoke 11.
Below this is explained in more detail.

As is shown FIG 1, yoke 11 of the present dental attachment is almost disk shaped and has collars 115 protruding radially outward from the outer peripheral surface 114. In the present instance, collars 115 is made all over the outer peripheral surface 114 at the edge of said head portion 112. Still, collars 115 can be made, for instance, at axially plural separated locations.

Also, said yoke 11 is made of soft magnetic material, 19Cr-2Mo-O.2Ti-Fe, and made by machining.
Yokell has recess 110 to house magnetic body 10 by machining. The inner diameter of this recess 110 is corresponding to the outer diameter of magnetic body 10 described later. Also, the corner of the outer periphery of the face, which has a recess 110, has taper shaped chamfer 118.

Said magnetic body 10 is made of Nd-Fe-B based permanent magnet, (BH)max=42MGOe.
Said disk 12 is made of soft magnetic material, 19Cr-2Mo-O.2Ti-Fe. After said magnetic body 10 is inserted in the recess of said yoke 11, said disk is inserted and the outer peripheral thereof is welded to yoke11 with the ring shaped connecting part 19 made of non-magnetic material.

Cap 2 has bottom 21 which faces head portion 112 of yoke 11 and lateral part 22 which faces said outer peripheral surface 114 and covers said collars 115. The lateral part 22 has inward protruding part 225 which protrudes toward outer peripheral surface114 of yoke 11 and is structured to engage the inward protruding part with collars 115 when cap 2 is located at the extended location (B) .

Also, cap 2 has, as is shown in the same FIG, taper face 226 which has a smaller diameter as it is further away from said bottom 21 at the outer peripheral face of lateral part 22.

The present dental attachment 1 has cap 2, which is movable between connecting part (A) and extended part (B), and is structured to be changeable to the relative position between said cap 2 and yoke11. Because of this structure, the denture with said cap 2 fixed in the dental base can change the relative position of the whole denture to yoke 11 ( attachment body100), and excellent operating effects can be exerted.

### (embodiment 2)

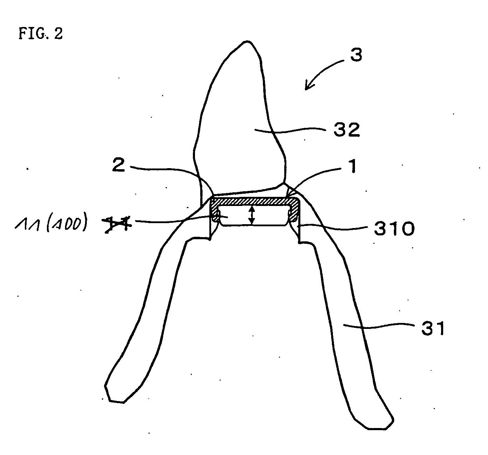

In the present example, as is shown in FIG2-FIG5, a denture which is made by using the dental attachment of embodiment 1, and the manufacturing method, are explained.

The present denture 3 consists, as is shown in FIG2, of artificial tooth 32 planted in dental base 31 and dental attachment 1 of embodiment 1 in said dental base. Cap 2 is held in said dental base 31 and yoke 11 (attachment body 100) can be movable to cap 2.

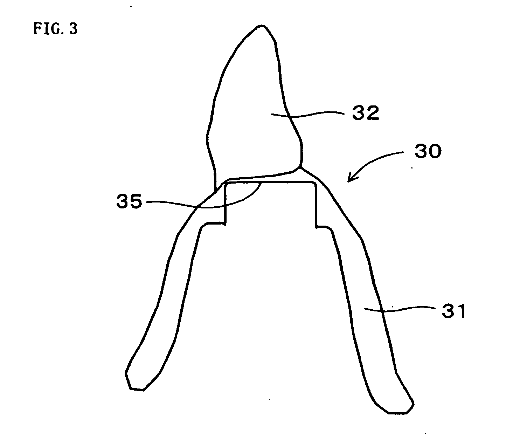

The first step to manufacture this denture is as is shown in FIG3; said artificial tooth 32 is planted in dental base 31 and denture body 30 which has recess 35 to insert dental attachment 1 in dental base 31 is manufactured.

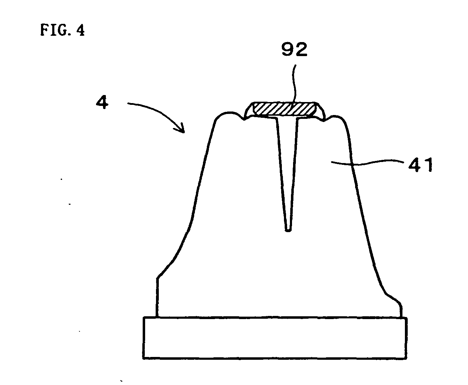

Also, as is shown in FIG4, model 4 on the keeper side which is embedded keeper 92 in the model gingiva 41 which copies the gingival shape including a tooth root part to install denture3 is manufactured. The manufacturing process of this model on the keeper side can be done before or after the manufacturing process of said denture body and both process can be done in parallel.

Also, in the process of manufacturing said denture body or a model on the keeper side, the process of impression taking which transfers the shape of the gingiva including tooth root part to install a denture is needed. Using prior rapid bonding adhesive or gypsum can do the process of impression taking.

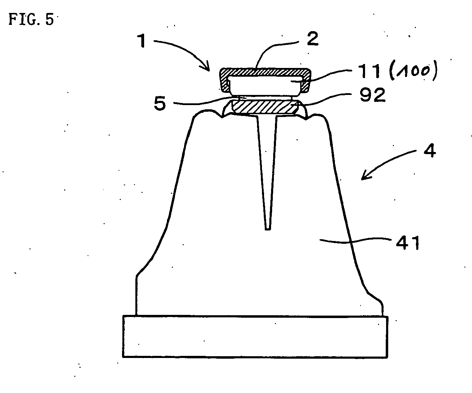

Next, as is shown in FIG5, preparing disk shaped spacer 5 which is made of ferrite magnet and has almost the same thickness of the moving distance of cap 2 of said dental attachment 1, the setting process of the dental attachment is done.
Specifically, as is shown in the same FIG, first, said spacer 5 is installed on said keeper 92 of the model 4 on the keeper side, and on it dental attachment 1 on which is installed cap 2 at the connecting position is installed. At this time disk 12 is connected with spacer 5. In the present example, as is mentioned above, spacer 5 is made of permanent magnet, so keeper 92, spacer 5 and dental attachment 1 are stably installed.

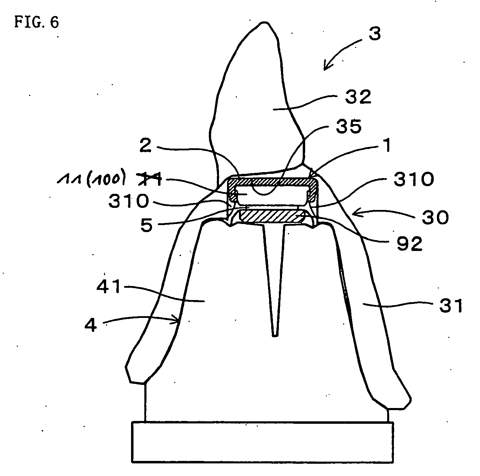

Next, as is shown in FIG6, adhesive 310 is applied inside said recess 35 of said denture body 30 and denture body 30 covers model 4 on the keeper side in order to house dental attachment 1 in recess 35. Thus, as is shown in the same FIG, cap 2 of dental attachment 1 is fixed in recess 35 with adhesive 310, completing denture 3 which has dental attachment 1.

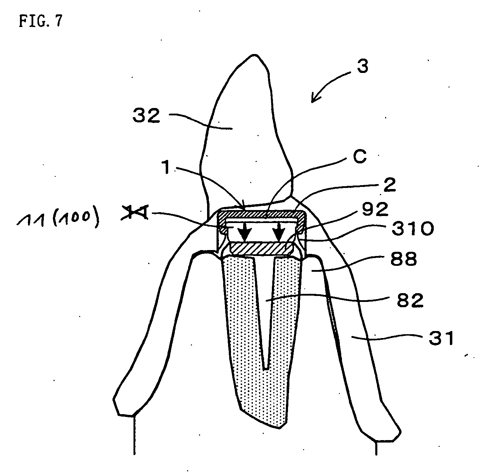

In present denture 3, cap 2 of the installed dental attachment is fixed and yoke 11 (attachment body 100) is held to be movable to said cap. The starting point of yoke 11 is set between the connecting point of yoke 11 with cap 2 and the connecting point with keeper 92 at the advanced point of the thickness of said spacer 5. Therefore, as is shown in FIG 7, when keeper 92 is embedded in real gingiva 88, which is an original of model 4 on said keeper side, and denture 3 is put on it, as is shown in the same FIG, yoke 11 advances relative to cap2 and contacts keeper 92 and is connected. Therefore, at the starting step of usage, a certain amount of gap C between cap 2 and yoke 11 is made and it become a space which adapts to the subsequent change over time.

That is, in the case that gingiva 88 begins to submerge, dental base 31 also begins to submerge. At this time, dental attachment 1 of the present example, as is mentioned above, can move relatively so as to shrink room C between yoke 11 and cap 2. Therefore, denture 3 can follow the change of gingiva 88's submerging and move to a suitable position. Therefore, in the present denture 3, even in the case that gingiva 88 etc. is changed by time, the concentration of the occluding stress on the combining part of the dental attachment can be restrained.

As said denture 3, a denture with a plurality of artificial teeth is especially effective, but a denture with only one artificial tooth 32 can also be excellently effective to exert the operating effect of said dental attachment 1.

### (embodiment 3)

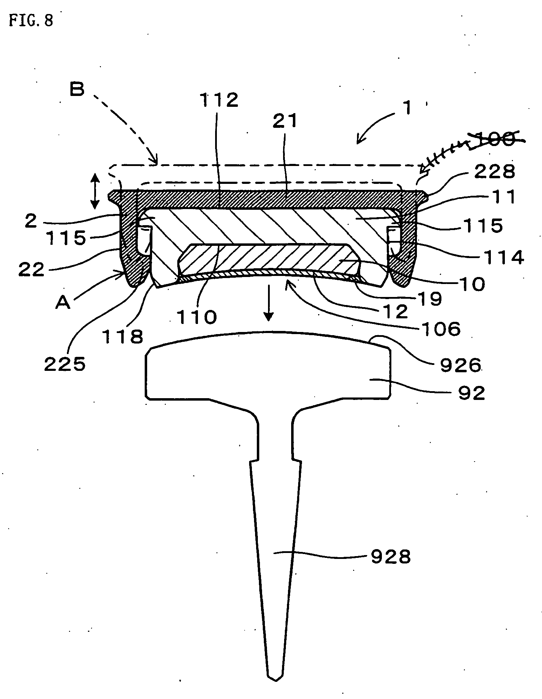

The present example, shown in FIG8, is an example of changing the shape etc. of the dental attachment of embodiment 1.

As is shown in FIG 8, first, absorbing surface 106 is made of a concave surface ( spherical face) . As keeper 92 facing attachment body 100, absorbed surface 926 which is made of a convex surface ( spherical face) and can be fit to said absorbing surface 106 is adopted. Said keeper 92 has a post 928 which is extended from the back center on the opposite side of absorbing surface 926.

Cap 2 which covers head portion 112 of attachment body 100 has cap collars 228 protruding outward at all outer peripheral surfaces of lateral part 22.
In other respects the structure is the same as embodiment 1.

The present example of the dental attachment, which has concave absorbing surface 106 as mentioned above, can be used in combination with keeper 92 which has convex absorbed surface 926. Therefore, the fitting condition of absorbing surface 106 and absorbed surface 926 is maintained and can be inclined from the starting condition. For some kinds of dentures, adopting this structure is very effective.

In the present example, said cap 2 has cap collars 228. Thus, when cap 2 is connected to dental base 31 with adhesive 310, cap collars 228 is embedded in adhesive 310 and the connecting strength between cap 2 and dental base 31 can be improved. Still, said cap collars 228 need not be made all around and a shape with at least one radially protruding part is possible.
It also obtains the same operating effect as embodiment 1.

### (embodiment 4)

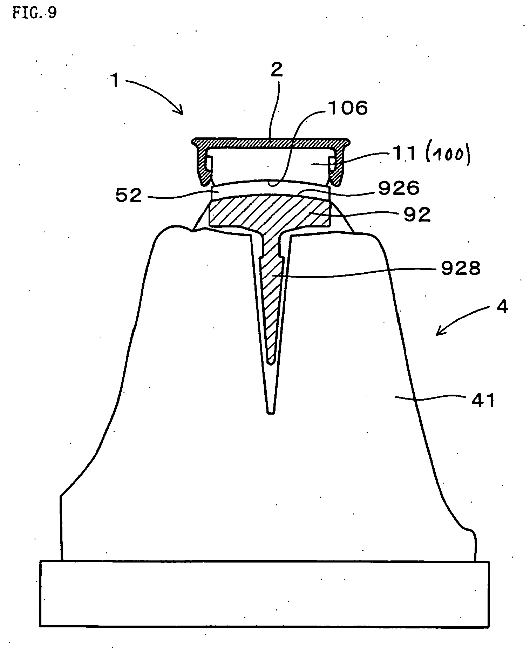

In the present example, as is shown FIG 9, the manufacturing method of the denture is explained by using the dental attachment of embodiment 3.
The manufacturing method of the present example, which is basically the same as embodiment 2, is changed in the shape and materials of spacer 52.
That is, first, like embodiment 2, the manufacturing process of denture body 30 and the manufacturing process of model 4, which has keeper 92 in model gingiva 41 on the keeper side, is performed.

Next, as is shown in FIG 9, the setting process of the dental attachment is performed by using disk shaped spacer 52 which is made of soft magnetic material, 19Cr-2Mo-O, and has the thickness of about the same as the moving distance of cap 2 of said dental attachment 1 and has a spherical shape with the same curvature as the absorbing surface 106 of said attachment body 100 and absorbed surface 926 of keeper 92. Said spacer 52 and absorbed surface 926 are connected with adhesive.
The process afterward is the same as embodiment 2.

As is mentioned above, in the present example, the dental attachment, which has concave absorbing surface 106, can be easily installed in denture body 30 by using a disk shaped spacer of said spherical shape.
It also obtains the same operating effect as embodiment 2.

## Claims

1. A dental attachment (1), which is embedded in a dental base (31) so as to fix to a keeper (92) by a magnetic attractive force, the keeper (92) being made of a soft magnet material and embedded in a tooth root, wherein :
the dental attachment (1) includes an attachment body (100) having a magnetic body (10) delivering a magnetic attractive force and a cap (2) covering a head portion (112) of the attachment body (100), the head portion (112) being located on the side opposite to an absorbing surface to fit to the keeper (92);
the cap (2) is made of a non magnetic material and is engaged with the attachment body (100) so as to be able to move between a contacting position (A), at which the cap (2) is in contact with said head portion (112), and an extended position (B) spaced from the contacting position (A) by a distance, a space being provided between the head portion (112) and the cap (2) when the cap (2) is at the extended position (B), wherein
said attachment body (100) is composed of said magnetic body (10), a yoke (11) made of a soft magnetic material with a concave part (110) which has said magnetic body (10), a disk (12) made of a soft magnetic material which is installed so as to close the opening part of said concave part (110) with said magnetic body (10) housed in said concave part (110), and a ring shaped contacting part (19) made of a non-magnetic material which connects said disk (12) and said yoke (11), and said cap (2) covereing said head portion (112), which is located on the opposite side to said opening part of said yoke (11),
**characterized in that**
said yoke (11) is almost disk shaped and has a collar (115) and a cylindrical outer peripheral surface (114), wherein said collar (115) is protruding radially outward from the cylindrical outer peripheral surface (114) of the yoke (11) at the edge of said head portion (112) of the yoke (11), and said cap (2) has a bottom (21) which faces said head portion (112), and a lateral part (22) which faces said cylindrical outer peripheral surface (114) of said yoke (11) and covers said collar (115), and said lateral part (22) has a part (225) protruding inward to said cylindrical outer peripheral surface (114) of said yoke (11), said protruding part (225) and said collar (115) are engaged, when said cap (2) is located at said extended position (B), and said protruding part (225) and said collar (115) are not engaged, when said cap (2) is located at said contacting position (A).

2. The dental attachment (1) according to claim 1, wherein the outer peripheral surface of the lateral part (22) of said cap (2) has a tapered surface (226) and/or an outward-protruding part.

3. The dental attachment (1) according to claim 1 or 2, wherein said cap (2) is made of a synthetic resin.

4. A denture (3) having a dental attachment (1) embedded in a dental base (31) to fix to a keeper (92) by a magnetic attractive force, the keeper (92) being made of a soft magnetic material and embedded in a tooth root, and an artificial tooth (32) planted in the dental base (31), wherein the denture (3) is
**characterized in that**
said dental attachment (1) is the dental attachment (1) according to any one of claims 1 to 3, and the cap (2) is held in the dental base (31) and the attachment body (100) is arranged to be able to move toward and away from the cap (2).

5. A method of manufacturing a denture (3) which has a dental attachment (1) in a dental base (31) so as to fix to a keeper (92) by a magnetic attractive force, the keeper (92) being made of a soft magnetic material and embedded in a tooth root, with an artificial tooth (32) planted in the dental base (31), wherein said dental attachment (1) is a dental attachment (1) according to any one of claims 1 to 3, the method comprising the steps of:
manufacturing a denture body (30), with said artificial tooth (32) planted in said dental base (31), which has a recess (35) so as to insert said dental attachment (1) in said dental base (31),
manufacturing a model (4) on the keeper side which has said keeper (92) in a model gingiva (41) of the gingival shape including said tooth root,
installing a spacer (5) with a thickness in the range of the moving distance of said cap (2) of said dental attachment (1) on said keeper (92) of the model (4) of the keeper side,
installing said dental attachment (1) on said spacer (5) such that said spacer (5) is contacted to said disk (12), and also said cap (2) of said dental attachment (1) is installed in said contacting position (A),
applying an adhesive (310) inside said recess (35) of said denture body (30), and
fitting said denture body (30) on the model (4), such that the dental attachment (1) is housed in the recess (35), and the cap (2) of said dental attachment (1) is fixed in the recess (35) with said adhesive (310).

6. The method according to claim 5, wherein said spacer (5) is made of a permanent magnet or a soft magnetic material.

## Patentansprüche

1. Gebissbefestigung (1), die in einer Gebissbasis (31) eingebettet ist, so dass sie durch eine magnetische Anziehungskraft an einem Halter (92) fixiert ist, wobei der Halter (92) aus einem weichmagnetischen Material hergestellt und in einer Zahnwurzel eingebettet ist, wobei
die Gebissbefestigung (1) einen Befestigungskörper (100), der einen magnetischen Körper (10), der eine magnetische Anziehungskraft bereitstellt, und eine Kappe (2) aufweist, die einen Kopfabschnitt (112) des Befestigungskörpers (100) bedeckt, wobei der Kopfabschnitt (112) auf der Seite gegenüber einer aufnehmenden Oberfläche angeordnet ist, die an den Halter (92) passt,
die Kappe (2) aus einem nicht-magnetischen Material hergestellt und mit dem Befestigungskörper (100) so in Eingriff ist, dass sie sich zwischen einer Kontaktierungsposition (A), bei der die Kappe (2) mit dem Kopfabschnitt (112) in Kontakt ist, und einer ausgefahrenen Position (B), die von der Kontaktierungsposition (A) in einem Abstand entfernt ist, bewegen kann, wobei ein Zwischenraum zwischen dem Kopfabschnitt (112) und der Kappe (2) bereitgestellt ist, wenn sich die Kappe (2) in der ausgefahrenen Position (B) befindet,
wobei der Befestigungskörper (100) aus dem magnetischen Körper (10), einem Joch (11), das aus einem weichmagnetischen Material hergestellt ist und einen konkaven Teil (110) aufweist, der den magnetischen Körper (10) aufweist, einer Scheibe (12), die aus einem weichmagnetischen Material hergestellt und so eingebaut ist, dass sie den Öffnungsteil des konkaven Teils (110) mit dem magnetischen Körper (10), der in dem konkaven Teil (110) untergebracht ist, schließt, und einem ringförmigen Kontaktierungsteil (19), der aus einem nicht-magnetischen Material hergestellt ist und die Scheibe (12) und das Joch (11) verbindet, zusammengesetzt ist, und wobei die Kappe (2) den Kopfabschnitt (112) bedeckt, der sich auf der dem Öffnungsteil des Jochs (11) gegenüber liegenden Seite befindet,
**dadurch gekennzeichnet, dass**
das Joch (11) nahezu scheibenförmig ist und einen Bund (115) und eine zylindrische Außenumfangsfläche (114) aufweist, wobei der Bund (115) von der zylindrischen Außenumfangsfläche (114) des Jochs (11) an der Kante des Kopfabschnitts (112) des Jochs (11) radial auswärts vorragt, und die Kappe (2) einen Boden (21), der auf den Kopfabschnitt (112) gerichtet ist, und einen seitlichen Teil (22), der auf die zylindrische Außenumfangsfläche (114) des Jochs (11) gerichtet ist und den Bund (115) bedeckt, aufweist, und wobei der seitliche Teil (22) einen Teil (225) aufweist, der zu der zylindrischen Außenumfangsfläche (114) des Jochs (11) einwärts vorragt, wobei der vorragende Teil (225) und der Bund (115) in Eingriff sind, wenn sich die Kappe (2) an der ausgefahrenen Position (B) befindet, und der vorragende Teil (225) und der Bund (115) nicht in Eingriff sind, wenn sich die Kappe (2) an der Kontaktierungsposition (A) befindet.

2. Gebissbefestigung (1) nach Anspruch 1, bei der die Außenumfangsfläche des seitlichen Teils (22) der Kappe (2) eine kegelförmige Fläche (226) und/oder einen auswärts vorragenden Teil aufweist.

3. Gebissbefestigung (1) nach Anspruch 1 oder 2, bei der die Kappe (2) aus einem synthetischen Harz hergestellt ist.

4. Gebiss (3), das eine Gebissbefestigung (1), die in einer Gebissbasis (31) eingebettet ist, so dass sie durch eine magnetische Anziehungskraft an einem Halter (92) fixiert ist, wobei der Halter (92) aus einem weichmagnetischen Material hergestellt und in einer Zahnwurzel eingebettet ist, und einen künstlichen Zahn (32) aufweist, der in die Gebissbasis (31) eingesetzt ist, wobei das Gebiss (3) **dadurch gekennzeichnet ist, dass**
die Gebissbefestigung (1) die Gebissbefestigung (1) nach einem der Ansprüche 1 bis 3 ist und die Kappe (2) in der Gebissbasis (31) gehalten ist und der Befestigungskörper (100) so angeordnet ist, dass er sich auf die Kappe (2) zu und von dieser weg bewegen kann.

5. Verfahren zur Herstellung eines Gebisses (3), das eine Gebissbefestigung (1) in einer Gebissbasis (31) aufweist, so dass sie an einem Halter (92) durch eine magnetische Anziehungskraft fixiert ist, wobei der Halter (92) aus einem weichmagnetischen Material hergestellt und in einer Zahnwurzel eingebettet ist, wobei ein künstlicher Zahn (32) in der Gebissbasis (31) eingesetzt ist, wobei die Gebissbefestigung (1) eine Gebissbefestigung (1) nach einem der Ansprüche 1 bis 3 ist, wobei das Verfahren die Schritte umfasst:
Herstellen eines Gebisskörpers (30), wobei der künstliche Zahn (32) in der Gebissbasis (31) eingesetzt ist, die eine Aussparung (35) zum Einsetzen der Gebissbefestigung (1) in die Gebissbasis (31) aufweist,
Herstellen eines Modells (4) auf der Seite des Halters, das den Halter (92) in einem Modellzahnfleisch (41) der Zahnfleischform aufweist, das die Zahnwurzel umfasst,
Einbauen eines Abstandshalters (5) mit einer Dicke im Bereich der Bewegungsdistanz der Kappe (2) der Gebissbefestigung (1) auf dem Halter (92) des Modells (4) auf der Seite des Halters,
Aufsetzen der Gebissbefestigung (1) auf den Abstandshalter (5), so dass der Abstandshalter (5) mit der Scheibe (12) in Kontakt kommt, und auch Einbauen der Kappe (2) der Gebissbefestigung (1) in der Kontaktierungsposition (A),
Aufbringen eines Haftmittels (310) innerhalb der Aussparung (35) des Gebisskörpers (30) und
Anbringen des Gebisskörpers (30) an dem Modell (4), so dass die Gebissbefestigung (1) in der Aussparung (35) aufgenommen wird, und Fixieren der Kappe (2) der Gebissbefestigung (1) in der Aussparung (35) mit dem Haftmittel (310).

6. Verfahren nach Anspruch 5, bei dem der Abstandshalter (5) aus einem Permanentmagneten oder einem weichmagnetischen Material hergestellt ist.

## Revendications

1. Accessoire de prothèse dentaire (1) qui est incorporé dans une base dentaire (31) de manière à le fixer à une armature (92) par une force d'attraction magnétique, l'armature (92) étant constituée d'un matériau magnétique doux et incorporée dans une racine de dent, dans lequel:
l'accessoire de prothèse dentaire (1) comprend un corps d'accessoire (100) qui comprend un corps magnétique (10) qui délivre une force d'attraction magnétique, et une coiffe (2) qui couvre une partie de tête (112) du corps d'accessoire (100), la partie de tête (112) étant située sur le côté opposé à une surface absorbante pour s'adapter sur l'armature (92);
la coiffe (2) est constituée d'un matériau non magnétique et est engagée avec le corps d'accessoire (100) de manière à pouvoir se déplacer entre une position de contact (A), dans laquelle la coiffe (2) est en contact avec ladite partie de tête (112), et une position étendue (B), espacée de la position de contact (A) d'une certaine distance, un espace étant prévu entre la partie de tête (112) et la coiffe (2) lorsque la coiffe (2) se trouve dans la position étendue (B), dans lequel
ledit corps d'accessoire (100) est composé dudit corps magnétique (10), d'une culasse (11) constituée d'un matériau magnétique doux présentant une partie concave (110) qui comprend ledit corps magnétique (10), d'un disque (12) constitué d'un matériau magnétique doux qui est installé de manière à fermer la partie d'ouverture de ladite partie concave (110) avec ledit corps magnétique (10) logé dans ladite partie concave (110), et d'une partie de contact de forme annulaire (19) constituée d'un matériau non magnétique qui relie ledit disque (12) et ladite culasse (11), et ladite coiffe (2) recouvre ladite partie de tête (112), qui est située sur le côté opposé à ladite partie d'ouverture de ladite culasse (11),
**caractérisé en ce que:**
ladite culasse (11) a presque la forme d'un disque et comprend un collier (115) et une surface périphérique extérieure cylindrique (114), dans laquelle ledit collier (115) est saillant radialement vers l'extérieur à partir de la surface périphérique extérieure cylindrique (114) de la culasse (11) au bord de ladite partie de tête (112) de la culasse (11), et ladite coiffe (2) présente un fond (21) qui fait face à ladite partie de tête (112), et une partie latérale (22) qui fait face à ladite surface périphérique extérieure cylindrique (114) de ladite culasse (11) et qui couvre ledit collier (115), et ladite partie latérale (22) comprend une partie (225) qui fait saillie vers l'intérieur en direction de ladite surface périphérique extérieure cylindrique (114) de ladite culasse (11), ladite partie saillante (225) et ledit collier (115) sont engagés, lorsque ladite coiffe (2) se trouve dans ladite position étendue (B), et ladite partie saillante (225) et ledit collier (115) ne sont pas engagés lorsque ladite coiffe (2) se trouve dans ladite position de contact (A).

2. Accessoire de prothèse dentaire (1) selon la revendication 1, dans lequel la surface périphérique extérieure de la partie latérale (22) de ladite coiffe (2) présente une surface conique (226) et/ou une partie saillant vers l'extérieur.

3. Accessoire de prothèse dentaire (1) selon la revendication 1 ou 2, dans lequel ladite coiffe (2) est constituée d'une résine synthétique.

4. Prothèse dentaire (3) comprenant un accessoire de prothèse dentaire (1) qui est incorporé dans une base dentaire (31) de manière à le fixer à une armature (92) par une force d'attraction magnétique, l'armature (92) étant constituée d'un matériau magnétique doux et incorporée dans une racine de dent, et une dent artificielle (32) plantée dans la base dentaire (31), dans laquelle la prothèse dentaire (3) est **caractérisée en ce que:** ledit accessoire de prothèse dentaire (1) est l'accessoire de prothèse dentaire (1) selon l'une quelconque des revendications 1 à 3, et la coiffe (2) est maintenue dans la base dentaire (31), et le corps d'accessoire (100) est agencé de manière à pouvoir se déplacer en direction et à l'écart de la coiffe (2).

5. Procédé de fabrication d'une prothèse dentaire (3) qui comprend un accessoire de prothèse dentaire (1) dans une base dentaire (31) de manière à le fixer à une armature (92) par une force d'attraction magnétique, l'armature (92) étant constituée d'un matériau magnétique doux et incorporée dans une racine de dent, avec une dent artificielle (32) plantée dans la base dentaire (31), dans lequel ledit accessoire de prothèse dentaire (1) est l'accessoire de prothèse dentaire (1) selon l'une quelconque des revendications 1 à 3, le procédé comprenant les étapes consistant à:
fabriquer un corps de prothèse dentaire (30), avec ladite dent artificielle (32) plantée dans ladite base dentaire (31), qui comporte un évidement (35) de manière à insérer ledit accessoire de prothèse dentaire (1) dans ladite base dentaire (31),
fabriquer un modèle (4) sur le côté d'armature qui est pourvu de ladite armature (92) dans une gencive modèle (41) de la forme gingivale qui comprend ladite racine de dent,
installer un écarteur (5) qui présente une épaisseur qui est comprise dans la gamme de la distance de déplacement de ladite coiffe (2) dudit accessoire de prothèse dentaire (1) sur ladite armature (92) du modèle (4) du côté d'armature,
installer ledit accessoire de prothèse dentaire (1) sur ledit écarteur (5) de telle sorte que ledit écarteur (5) entre en contact avec ledit disque (12), et en outre ladite coiffe (2) dudit accessoire de prothèse dentaire (1) est installée dans ladite position de contact (A),
appliquer un adhésif (310) à l'intérieur dudit évidement (35) dudit corps de prothèse dentaire (30), et
adapter ledit corps de prothèse dentaire (30) sur le modèle (4) de telle sorte que l'accessoire de prothèse dentaire (1) soit logé dans l'évidement (35), et que la coiffe (2) dudit accessoire de prothèse dentaire (1) soit fixée dans l'évidement (35) à l'aide dudit adhésif (310).

6. Procédé selon la revendication 5, dans lequel l'écarteur (5) est constitué d'un aimant permanent ou d'un matériau magnétique doux.
